# EUROPEAN PATENT SPECIFICATION

(11) **EP 2 877 264 B1**
(45) Date of publication and mention of the grant of the patent: **11.09.2019**
(21) Application number: 13823576.7
(22) Date of filing: 01.05.2013
(51) Int. Cl.: B01D 45/00, B01D 17/02, E21B 43/36

(54) **MULTIPHASE SEPARATION SYSTEM**
MEHRPHASENTRENNUNGSSYSTEM
SYSTÈME DE SÉPARATION MULTIPHASE

(30) Priority: 27.07.2012 US 201261676753 P
(43) Date of publication of application: 03.06.2015
(73) Proprietor: ExxonMobil Upstream Research Company, Spring TX 77389 (US)
(72) Inventor: GRAVE, Edward J., Spring, TX 77388 (US); BYMASTER, Adam S., Humble, TX 77346 (US); FOWLER, Tracy A., Sugar Land, TX 77478 (US)
(74) Representative: Uexküll & Stolberg
(86) International application number: PCT/US2013/039089
(87) International publication number: WO 2014/018148

(56) References cited:
- WO-A1-2009/108063
- WO-A2-2008/115074
- FR-A1- 2 921 844
- RU-C1- 2 451 251
- US-A- 3 768 726
- US-A- 4 187 088
- US-A1- 2006 032 242
- US-A1- 2010 180 769
- US-A1- 2011 209 446
- A Hannisdal ET AL: "OTC 23223 Compact Separation Technologies and Their Applicability for Subsea Field Development in Deep Water", Copyright, 30 April 2012 (2012-04-30), XP055189860, Retrieved from the Internet: URL:http://asme-ipti.org/files/1841/ [retrieved on 2015-05-18]
- CHUANG ET AL. TRAY COLUMNS: DESIGN. 2000, pages 1135 - 1140, XP008176351 Retrieved from the Internet: <URL:http://razifar.com/cariboost files/Tray_20Columns 20Design.pdf> [retrieved on 2013-09-22]
- HANNISDAL ET AL.: 'Compact Separation Technologies and Their Applicability for Subsea Development in Deep Water.' OFFSHORE TECHNOLOGY CONFERENCE. 2012, pages 1 - 12, XP055189860 Retrieved from the Internet: <URL:http://asme-ipti.org/files/1841> [retrieved on 2013-09-20]

## Description

### FIELD OF THE INVENTION

The present techniques provide for the separation of gases and liquids within production fluids. More specifically, the techniques provide for the separation of production fluids into gases and liquids using a subsea multiphase separation system.

### BACKGROUND

This section is intended to introduce various aspects of the art, which may be associated with exemplary embodiments of the present techniques. This discussion is believed to assist in providing a framework to facilitate a better understanding of particular aspects of the present techniques. Accordingly, it should be understood that this section should be read in this light, and not necessarily as admissions of prior art.

Any of a number of subsea separation techniques may be used to enhance the amount of oil and gas recovered from subsea wells. However, subsea separation at water depths greater 1500 meters becomes especially challenging due to the environmental conditions. As water depth increases, the external pressure on a vessel created by the hydrostatic head increases the required wall thickness for vessels used for subsea processing. At water depths greater than 1500 meters, this wall thickness has increased to such an extent that typical gravity separation is not practical. In addition, vessels with such a large wall thickness can be a challenge to fabricate, and the added material and weight can impact project economics, as well as the availability of the vessel for maintenance. As a result, large diameter separators often cannot be used at such depths. An example of a system used in prior art is given in WO2008/115074A2.

### SUMMARY

An exemplary embodiment provides a multiphase separation system including an inlet line configured to feed a multiphase fluid into a circular distribution header within the multiphase separation system, wherein the circular distribution header is coupled to a number of upper lines and a number of lower lines. Each upper line is configured to feed gases into a circular gas header, wherein the circular gas header is in a second plane that is above a plane of the circular distribution header. Each lower line is configured to feed liquids into a circular liquid header, wherein the circular liquid header is in a third plane that is below the plane of the circular distribution header. The multiphase separation system also includes a gas outlet line that is coupled to the circular gas header and is configured to flow the gases out of the multiphase separation system, and a liquid outlet line that is coupled to the circular liquid header and is configured to flow the liquids out of the multiphase separation system. The gas outlet line and the liquid outlet line are coupled via a downcomer configured to allow entrained liquids to flow from the gas outlet line to the liquid outlet line.

Another exemplary embodiment provides a method for separation of liquids and gases within a multiphase fluid. The method includes flowing a multiphase fluid into a circular distribution header of a multiphase separation system and separating the multiphase fluid into gases and liquids within the circular distribution header. The method also includes flowing the gases into a circular gas header that is above a plane of the circular distribution header and flowing the liquids into a circular liquid header that is below the plane of the circular distribution header. The method further includes flowing the gases out of the multiphase separation system via a gas outlet line and flowing the liquids out of the multiphase separation system via a liquid outlet line, wherein entrained liquids within the gas outlet line are flowed to the liquid outlet line via a downcomer.

### BRIEF DESCRIPTION OF THE DRAWINGS

The advantages of the present techniques are better understood by referring to the following detailed description and the attached drawings, in which:
Fig. 1 is a block diagram showing a system for separating production fluids into a gas stream and a liquid stream using a multiphase separation system;
Fig. 2 is a perspective view of a multiphase separation system according to the invention;
Fig. 3 is a side view of the multiphase separation system of Fig. 2;
Fig. 4 is a process flow diagram showing a method for separating gases and liquids within a multiphase fluid;
Fig. 5 is a perspective view of another multiphase separation system;
Fig. 6 is a side view of the multiphase separation system of Fig. 5;
Fig. 7 is a perspective view of another multiphase separation system; and
Fig. 8 is a side view of the multiphase separation system of Fig. 7.

### DETAILED DESCRIPTION

In the following detailed description section, specific embodiments of the present techniques are described. However, to the extent that the following description is specific to a particular embodiment or a particular use of the present techniques, this is intended to be for exemplary purposes only and simply provides a description of the exemplary embodiments. Accordingly, the techniques are not limited to the specific embodiments described below, but rather, include all alternatives, modifications, and equivalents falling within the true spirit and scope of the appended claims.

As discussed above, traditional large diameter separators face technical challenges at depths greater than approximately 1500 meters. Thus, embodiments described herein provide an unconventional separation system that is capable of achieving acceptable gas-liquid separation and damping potential flow fluctuations, while meeting the size and weight restrictions imposed on deepwater processing units. Further, the separation system can be designed to pipe code instead of vessel code, which may provide cost and weight savings. In many cases, for a given pressure class, the required wall thickness for a pipe is less than the required wall thickness for a corresponding vessel.

According to embodiments described herein, a compact, subsea multiphase separation system is used to enhance subsea well production, especially in deepwater and Arctic environments. In various embodiments, the subsea multiphase separation system is a four phase subsea separator that is configured to separate production fluids into a gas phase, an oil phase, an aqueous phase, and a solid phase. In other words, subsea separation may be used to create single phase streams. This may allow for the usage of single phase pumps, which are more efficient and can achieve larger pressure differentials compared to multiphase pumps. In order to pump a single phase stream, one single phase pump may be sufficient. In contrast, in order to pump a multiphase stream, a series of multiphase pumps may be used to achieve the same pressure differential, especially for high boosting applications.

The separation process described herein may be used to achieve bulk removal of aqueous fluids from production fluids. The removal of aqueous fluids is termed water removal herein, although this may be understood to include water with other contaminants, such as salts or other miscible fluids. Such bulk water removal may mitigate flow assurance concerns, by allowing substantially pure oil and/or gas streams to be sent to the surface. These substantially pure streams will form lower amounts of hydrates, such as methane clathrates, thus lowering the risk of plugging or flow restrictions. Further, corrosion concerns can be reduced or eliminated. The sand and water by-product streams can then be disposed topsides to dedicated disposal zones, reservoirs, the seabed, or the like.

Bulk water removal may also result in a decrease in the hydrostatic head acting on the reservoir, thus increasing both the reservoir drive and production. Further, the separation process may be used to reduce flow line infrastructure, reduce the number of topside water treating facilities, reduce power and pumping requirements, and de-bottleneck existing facilities that are challenged with declining production rates due to increased water cuts.

As used herein, the term "slug" refers to a small volume of fluid that is entrained within the production fluids and is often of a higher density than the production fluids, for example, a liquid zone carried along by gas flow in a pipeline. Slugs may affect the flow characteristics of the production fluids. In addition, slugs exiting a pipeline may overload the gas-liquid handling capacity of the subsea, topsides, or onshore processing facility at the pipeline outlet. Thus, according to embodiments described herein, one or more subsea multiphase slug catchers may be used to dampen or remove the slugs from the production fluids before the production fluids enter the export pipelines.

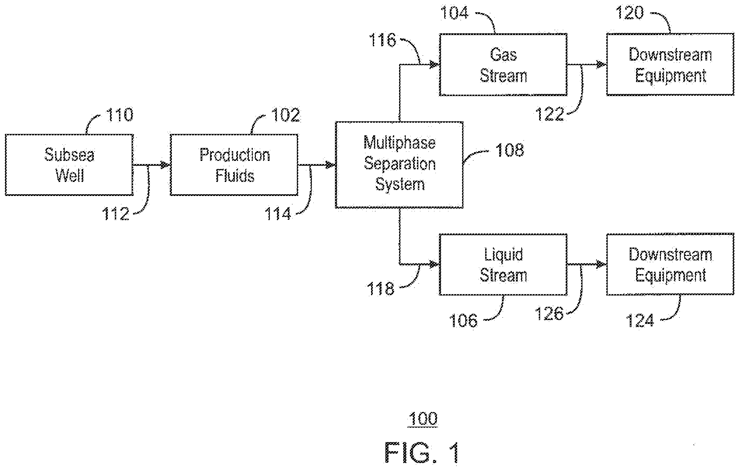

Fig. 1 is a block diagram showing a system **100** for separating production fluids **102** into a gas stream **104** and a liquid stream **106** using a multiphase separation system **108**. The production fluids **102** may be hydrocarbon fluids that include a mixture of natural gas, oil, brine, and solid impurities, such as sand. The production fluids **102** may be obtained from a subsea well **110**, as indicated by arrow **112**. The production fluids **102** may be obtained from the subsea well **110** via any type of subsea production system (not shown) that is configured to produce hydrocarbons from subsea locations.

In an embodiment, the production fluids **102** are flowed into the multiphase separation system **108**, as indicated by arrow **114**. The multiphase separation system **108** may be any type of vessel that is configured to achieve bulk separation of gas and liquid from the production fluids **102**. In addition, the multiphase separation system **108** may remove slugs from the production fluids **102**. The multiphase separation system **108** may be implemented within a subsea environment.

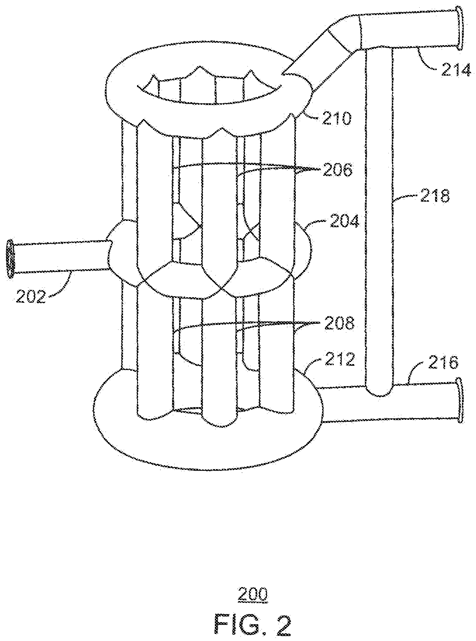

Within the multiphase separation system **108**, the production fluids **108** may be separated into the gas stream **104** and the liquid stream **106**, as indicated by arrows **116** and **118,** respectively. The gas stream **104** may include natural gas, while the liquid stream **106** may include water, oil, and other residual impurities, such as sand. Designs for the multiphase separation system **108**, as well as the mechanisms by which the multiphase separation system **108** may affect the quality of the separated gas stream **104** and the separated liquid stream **106**, are described with respect to Figs. 2-8.

In some embodiments, the gas stream **104** is flowed to downstream equipment **120**, as indicated by arrow **122**. The downstream equipment **120** may include, for example, any type of downstream gas processing equipment, such as a gas compressor, gas treatment facility, gas polishing device, or the like, or a gas pipeline. In addition, the liquid stream **106** may be flowed to downstream equipment **124**, as indicated by arrow **126**. The downstream equipment **124** may include, for example, oil and water pre-treating or coalescence equipment, such as a heating system, chemical injection system, electrostatic coalescer, or the like, a pipe separator or cyclone for oil-water separation, or a liquid export pipeline.

The block diagram of Fig. 1 is not intended to indicate that the system **100** is to include all of the components shown in Fig. 1. Further, any number of additional components may be included within the system **100**, depending on the details of the specific implementation. For example, the multiphase separation system **108** can be designed to achieve liquid/liquid separation, thus delivering two substantially pure oil and water streams to the downstream equipment **124**. Further, multiphase and single phase desanders may be placed upstream and/or downstream of the multiphase separation system **108**.

Fig. 2 is a perspective view of a multiphase separation system **200**. The multiphase separation system **200** may include an inlet line **202** configured to feed the multiphase fluid into a circular distribution header **204**. The multiphase fluid may be any type of fluid that includes both liquid and gaseous components. For example, the multiphase fluid may be production fluids from a subsea well. The circular distribution header **204** may be coupled to a number of upper lines **206** and a number of lower lines **208**. The upper lines **206** and the lower lines **208** are perpendicular to the circular distribution header **204**.

Each upper line **206** may feed gases within the multiphase fluid into a circular gas header **210**. The circular gas header **210** may be in a second plane that is above and substantially parallel to the circular distribution header **204**. In addition, each lower line **208** may feed liquids within the multiphase fluid into a circular liquid header **212**. The circular liquid header **212** may be below and substantially parallel to the circular distribution header **204**.

A gas outlet line **214** may be coupled to the circular gas header **210** and may be configured to flow the gases out of the multiphase separation system **200**. A liquid outlet line **216** may be coupled to the circular liquid header **212** and may be configured to flow the liquids out of the multiphase separation system **200**. The gas outlet line **214** and the liquid outlet line **216** are coupled via a downcomer **218**. The downcomer **218** may be configured at a right angle or an oblique angle.

The downcomer **218** may allow entrained liquids within the gases to flow from the gas outlet line **214** to the liquid outlet line **216**. In addition, the downcomer **218** may allow entrained gases within the liquids to flow from the liquid outlet line **216** to the gas outlet line **214**. However, in some embodiments, the separation of gases and liquids may be sufficient in the upper lines **206** and the lower lines **208** perpendicular to the circular distribution header **204**.

The schematic of Fig. 2 is not intended to indicate that the subsea multiphase separation system **200** is to include all of the components shown in Fig. 2. Further, any number of additional components may be included within the subsea multiphase separation system **200**, depending on the details of the specific implementation. For example, the liquid outlet line **216** may be extended, with or without an optional sealing downcomer, to increase residence time in the liquid phase and achieve oil/water separation. This may allow for the enhancement or the elimination of downstream oil/water separation steps and equipment. In addition, the liquid outlet line **216** may include separate outlet lines for flowing the oil and water out of the multiphase separation system **200**.

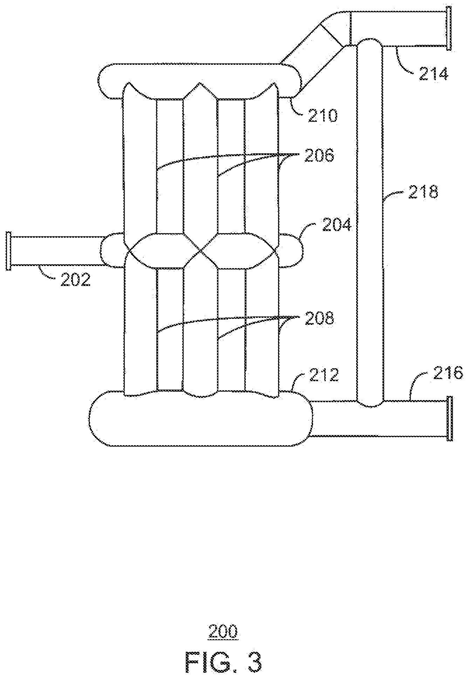

Fig. 3 is a side view of the multiphase separation system **200** of Fig. 2. As shown in Fig. 3, the circular distribution header **204** may be in the same plane as the inlet line **202**. Thus, the multiphase fluid may flow directly into the circular distribution header **204**. Due to the configuration of the circular distribution header **204**, the multiphase fluid flow may initially distribute along two flow paths within the circular distribution header **204**, resulting in a reduction in velocity of the multiphase fluid as it flows throughout the circular distribution header **204**. In some embodiments, such a reduction in velocity of the multiphase fluid dissipates any slugs within the multiphase fluid. In addition, the circular distribution header **204** may act as a stratification section that is configured to perform an initial bulk separation of gases and liquids within the multiphase fluid.

The upper lines **206** are perpendicular to the circular distribution header **204** and may couple the circular distribution header **204** to the circular gas header **210**. The lower lines **208** may be perpendicular to the circular distribution header **204** and may couple the circular distribution header **204** to the circular liquid header **212**. The circular gas header **210** and the circular liquid header **212** may be parallel to the circular distribution header **204**.

In some embodiments, the circular gas header **210** acts as a droplet separation section configured to remove entrained liquids from the gases within the circular gas header **210**. In addition, in some embodiments, the circular liquid header **212** acts as a liquid degassing section configured to remove entrained gases from the liquids within the circular liquid header **212**.

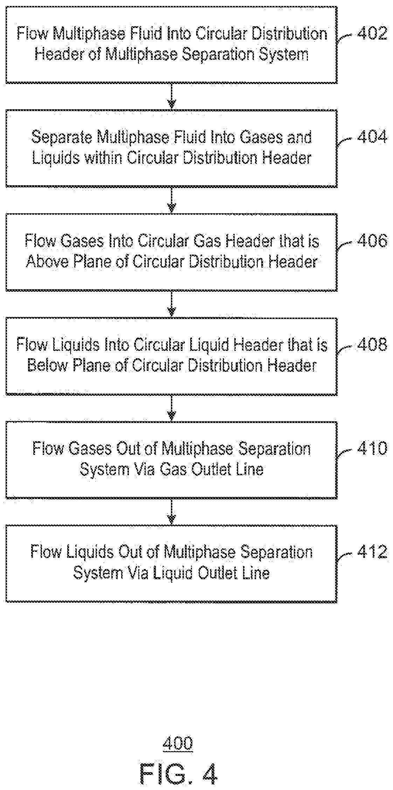

Fig. 4 is a process flow diagram showing a method **400** for separating gases and liquids within a multiphase fluid. In various embodiments, the multiphase separation system **200** discussed above with respect to Figs. 2 and 3 is used to implement the method **400**.

The method begins at block **402**, at which the multiphase fluid is flowed into a circular distribution header of the multiphase separation system. The multiphase fluid may be flowed into the circular distribution header via an inlet line of the multiphase separation system.

At block **404**, the multiphase fluid is separated into gases and liquids within the circular distribution header. The circular distribution header may be a stratification section that allows for an initial bulk separation of the gases and liquids. However, some amount of liquids may be entrained within the gases, and some amount of gases may be entrained within the liquids. In addition, the circular distribution header may dissipate any slugs that are within the multiphase fluid.

At block **406**, the gases are flowed into a circular gas header that is above a plane of the circular distribution header. The gases may be flowed into the circular gas header via a number of upper lines that are perpendicular the circular distribution header. In various embodiments, the velocity and pressure of the gases are lowered by splitting the gases among the upper lines.

At block **408**, the liquids are flowed into a circular liquid header that is below the plane of the circular distribution header. The liquids may be flowed into the circular liquid header via a number of lower lines that are perpendicular to the circular distribution header. In various embodiments, the velocity and pressure of the liquids are lowered by splitting the liquids among the lower lines.

At block **410**, the gases are flowed out of the multiphase separation system via a gas outlet line. The gases may be sent to a gas export line or any other type of downstream equipment. At block **412**, the liquids are flowed out of the multiphase separation system via a liquid outlet line. The liquids may be sent to a liquid export line or any other type of downstream equipment.

As the gases and the liquids are flowing out of the multiphase separation system, entrained liquids within the gas outlet line are flowed to the liquid outlet line via a downcomer. In addition, entrained gases within the liquid outlet line are allowed to rise to the gas outlet line via the downcomer.

The process flow diagram of Fig. 4 is not intended to indicate that the steps of the method **400** are to be executed in any particular order, or that all of the steps of the method **400** are to be included in every cases. Further, any number of additional steps not shown in Fig. 4 may be included within the method **400**, depending on the details of the specific implementation.

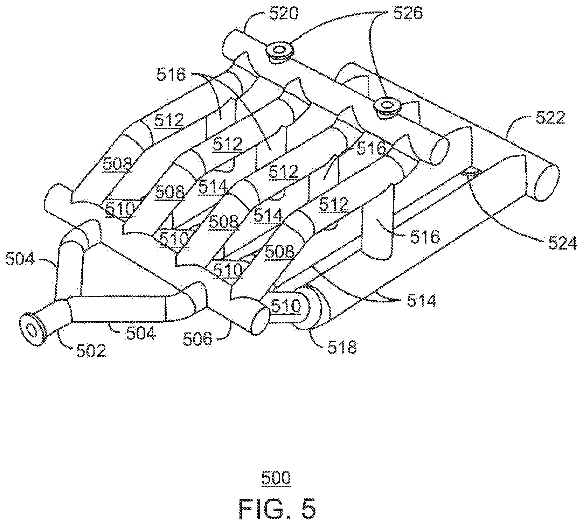

Fig. 5 is a perspective view of another multiphase separation system **500**. The multiphase separation system **500** may include an inlet line **502** that is configured to allow a multiphase fluid to flow into the multiphase separation system **500**. The inlet line **502** may include a number of divisions **504** that are configured to lower the velocity of the multiphase fluid and feed the multiphase fluid into a distribution header **506**.

The distribution header **506** may be configured to split the multiphase fluid among a number of upper fingers **508** and a number of lower fingers **510**. Each upper finger **508** is angled upward to feed into a corresponding upper pipe **512** in a first plane disposed above and substantially parallel to the distribution header **506**. Each lower finger **510** is angled downward to feed into a corresponding lower pipe **514** in a second plane disposed below and substantially parallel to the distribution header **506**. In addition, each upper pipe **512** may be coupled to a corresponding lower pipe **514** via a downcomer **516**. The downcomer **516** may be configured perpendicular to the upper pipes **512** and lower pipes **514**, or may be at an oblique angle.

Each lower pipe **514** may include an expansion zone **518** that is configured to lower a velocity and a pressure of liquids within the lower pipe **514**. This may allow entrained gases within the liquids to rise to the corresponding upper pipe **512** via the downcomer **516**.

Each upper pipe **512** may feed into a common gas header **520**. The gas header **520** may be configured to lower a velocity of gases within the upper pipe **512** to allow entrained liquids, such as droplets, within the gases to coalesce and drop to the corresponding lower pipe **514** via the downcomer **516**.

The multiphase separation system **500** may also include a liquid header **522** for collecting the liquids and flowing the liquids out of the multiphase separation system **500** via liquid outlet lines **524**. In addition, the gas header **520** may include gas outlet lines **526** for flowing the gases out of the multiphase separation system **500**.

The schematic of Fig. 5 is not intended to indicate that the subsea multiphase separation system **500** is to include all of the components shown in Fig. 5. Further, any number of additional components may be included within the subsea multiphase separation system **500**, depending on the details of the specific implementation. For example, the lower pipe **514** may be extended, with or without an optional sealing downcomer, to increase residence time in the liquid phase and achieve oil/water separation. This may allow for the enhancement or the elimination of downstream oil/water separation steps and equipment. Separate oil and water outlets can be included in the liquid header **522** for flowing the oil and water out of the multiphase separation system **500**.

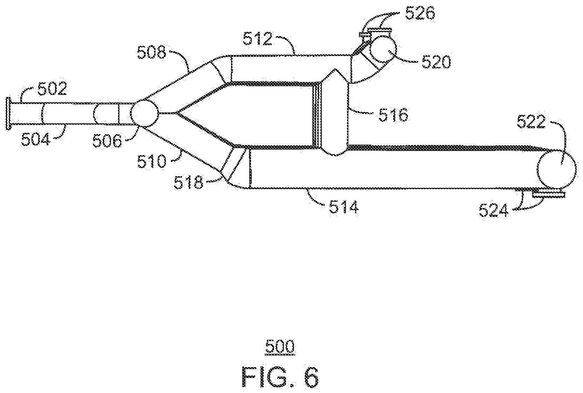

Fig. 6 is a side view of the multiphase separation system **500** of Fig. 5. As shown in Fig. 6, the divisions **504** may be in the same plane as the inlet line **502**. Thus, the multiphase fluid may be flowed directly into the divisions **504** from the inlet line **502**. However, because the multiphase fluid is split among the divisions **504**, the velocity of the multiphase fluid is reduced. In some embodiments, the reduction in velocity of the multiphase fluid dissipates any slugs within the multiphase fluid.

The distribution header **506** may also be in the same plane as the inlet line **502**. Thus, the multiphase fluid may be flowed directly into the distribution header **506** from the divisions **504**. Within the distribution header **506**, the multiphase fluid may be split among the upper fingers **508** and the lower fingers **510**. This may further reduce the velocity of the multiphase fluid.

In some embodiments, the distribution header **506** is a stratification section that is configured to perform an initial bulk separation of gases and liquids within the multiphase fluid. Thus, gases may be flowed into the upper fingers **508**, and liquids may be flowed into the lower fingers **510**. The gases may be flowed from the upper fingers **508** to corresponding upper pipes **512**, and the liquids may be flowed from the lower fingers **510** to corresponding lower pipes **514**. In some embodiments, the upper pipes **512** are parallel to the lower pipes **514**.

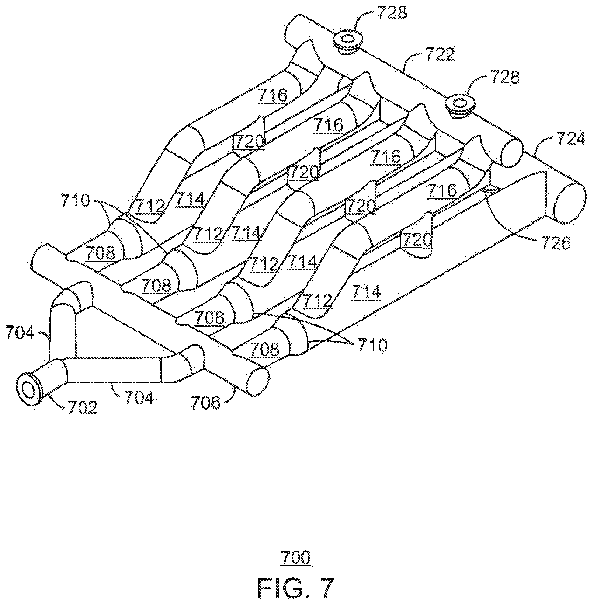

Fig. 7 is a perspective view of another multiphase separation system **700**. The multiphase separation system **700** may include an inlet line **702** configured to allow a multiphase fluid to flow into the multiphase separation system **700**. The inlet line **702** may include a number of divisions **704** configured to lower a velocity of the multiphase fluid and feed the multiphase fluid into a distribution header **706**.

The distribution header **706** is configured to split the multiphase fluid among a number of pipes **708** in a same plane as the distribution header. Each pipe **708** may include an expansion zone **710** configured to lower the velocity and the pressure of the multiphase fluid. The multiphase fluid is split between each upper finger **712** and a corresponding lower pipe **714**.

Each upper finger **712** may feed into a corresponding upper pipe **716** in a second plane disposed above and substantially parallel to the plane of the distribution header **706**. Each lower pipe **714** may be in the same plane as the distribution header **706**. In addition, each upper pipe **716** may be coupled to a corresponding lower pipe **714** via a downcomer **720**. The downcomer **720** may be configured at a right angle (as shown) or an oblique angle.

Each lower pipe **714** can be configured to allow entrained gases within liquids to rise to the corresponding upper pipe **716** via the downcomer **720**. Each upper pipe **716** may feed into a common gas header **722**. The gas header **722** may be configured to lower a velocity of gases to allow entrained liquid droplets to coalesce and drop to any of the lower pipes **714** via any of the downcomers **720**.

The multiphase separation system **700** may include a liquid header **724** for collecting the liquids from the lower pipes **714** and flowing the liquids out of the multiphase separation system **700** via liquid outlet lines **726**. In addition, the gas header **722** may include gas outlet lines **728** for flowing the gases out of the multiphase separation system **700**.

The schematic of Fig. 7 is not intended to indicate that the subsea multiphase separation system **700** is to include all of the components shown in Fig. 7. Further, any number of additional components may be included within the subsea multiphase separation system **700**, depending on the details of the specific implementation. For example, the lower pipe **714** may be extended, with or without an optional sealing downcomer, to increase residence time in the liquid phase and achieve oil/water separation. This may allow for the enhancement or the elimination of downstream oil/water separation steps and equipment. Separate oil and water outlets can be included in the liquid header **724** for flowing the oil and water out of the multiphase separation system **700**.

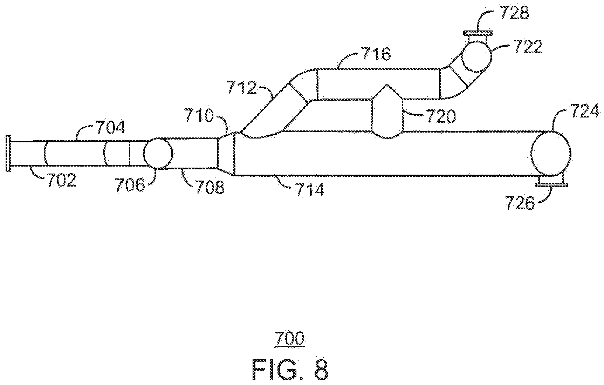

Fig. 8 is a side view of the multiphase separation system **700** of Fig. 7. As shown in Fig. 8, the divisions **704** may be in the same plane as the inlet line **702**. Thus, the multiphase fluid may be flowed directly into the divisions **704** from the inlet line **702**. However, because the multiphase fluid is split among the divisions **704**, the velocity of the multiphase fluid is reduced. In some embodiments, such a reduction in velocity of the multiphase fluid dissipates any slugs within the multiphase fluid.

The distribution header **706** may also be in the same plane as the inlet line **702**. Thus, the multiphase fluid may be flowed directly into the distribution header **706** from the divisions **704**. Within the distribution header **706**, the multiphase fluid may be split among the pipes **708**. Within the pipes **708**, the multiphase fluid may be flowed through the expansion zone **710**, resulting in a reduction of the pressure and velocity of the multiphase fluid.

The multiphase fluid may then be split between each of the upper fingers **712** and the corresponding lower pipe **714**. This may further reduce the velocity of the multiphase fluid. In some embodiments, the distribution header **706** acts as a stratification section that is configured to perform an initial bulk separation of gases and liquids within the multiphase fluid. Thus, gases may be flowed into the upper fingers **712**, and liquids may remain in the lower pipes **714**. In addition, the gases may be flowed from the upper fingers **712** to corresponding upper pipes **716**. In some embodiments, the upper pipes **716** are parallel to the lower pipes **714.**

## Claims

1. A multiphase separation system, comprising:
an inlet line (202) configured to feed a multiphase fluid into a circular distribution header (204) within the multiphase separation system, wherein the circular distribution header (204) is coupled to a number of upper lines (206) and a number of lower lines (208);
each upper line (206) configured to feed gases into a circular gas header (210), wherein the circular gas header (210) is in a second plane that is above a plane of the circular distribution header (204);
each lower line (208) configured to feed liquids into a circular liquid header (212), wherein the circular liquid header (212) is in a third plane that is below the plane of the circular distribution header (204);
wherein the number of upper lines (206) and the number of lower lines (208) are perpendicular to the circular distribution header (204);
a gas outlet line (214) that is coupled to the circular gas header (210) and is configured to flow the gases out of the multiphase separation system; and
a liquid outlet line (216) that is coupled to the circular liquid header (212) and is configured to flow the liquids out of the multiphase separation system;
wherein the gas outlet line (214) and the liquid outlet line (216) are coupled via a downcomer (218) configured to allow entrained liquids to flow from the gas outlet line (214) to the liquid outlet line (216).

2. The multiphase separation system of claim 1, wherein the circular gas header (210) includes a droplet separation section configured to remove entrained liquids from the gases.

3. The multiphase separation system of any of claims 1 or 2, wherein the circular liquid header includes a liquid degassing section configured to remove entrained gases from the liquids.

4. The multiphase separation system of any of claims 1-3, wherein the multiphase circular distribution header (204) includes a stratification section configured to separate gases from liquids within the multiphase fluid.

5. The multiphase separation system of any of claims 1-4, wherein the second plane and the third plane are parallel to the plane of the distribution header.

6. The multiphase separation system of any of claims 1-5, wherein the multiphase fluid includes production fluids from a subsea well.

7. The multiphase separation system of any of claims 1-6, comprising a desander wherein the desander is located upstream of the inlet line (202), located downstream of the liquid outlet line (216).

8. The multiphase separation system of any of claims 1-7, including;
an oil/water separation section that is coupled to the circular liquid header (212) and is configured to separate the liquids into oil and water;
an oil outlet line that is coupled to the oil/water separation section and is configured to flow the oil out of the multiphase separation system; and
a water outlet line that is coupled to the oil/water separation section and is configured to flow the water out of the multiphase separation system, wherein the oil/water separation section is coupled to the circular distribution header (204) via a sealing downcomer.

9. A method for separation of liquids and gases within a multiphase fluid using a multiphase separation system as defined in claim 1, including:
flowing a multiphase fluid into the circular distribution header (204) of the multiphase separation system;
separating the multiphase fluid into gases and liquids within the circular distribution header (204);
flowing the gases into the circular gas header (210) that is above a plane of the circular distribution header (204);
flowing the liquids into the circular liquid header (212) that is below the plane of the circular distribution header (204);
flowing the gases out of the multiphase separation system via the gas outlet line (214); and
flowing the liquids out of the multiphase separation system via the liquid outlet line (216);
wherein entrained liquids within the gas outlet line are flowed to the liquid outlet line via the downcomer.

10. The method of claim 9, including:
flowing the gases from the multiphase separation system to downstream liquid processing equipment or a gas export line; and
flowing the liquids from the multiphase separation system to downstream gas processing equipment or a liquid export line.

11. The method of any of claims 9 or 10, including:
separating the liquids into oil and water;
flowing the oil out of the multiphase separation system via an oil outlet line; and
flowing the water out of the multiphase separation system via a water outlet line.

## Patentansprüche

1. Mehrphasentrennungssystem, das
eine Einlassleitung (202), die ausgestaltet ist, um ein Mehrphasenfluid in einen kreisförmigen Verteilungssammler (204) innerhalb des Mehrphasentrennungssystems einzuspeisen, wobei der kreisförmige Verteilungssammler (204) an eine Anzahl von oberen Leitungen (206) und eine Anzahl von unteren Leitungen (208) gekoppelt ist,
wobei jede obere Leitung (206) ausgestaltet ist, um Gase in einen kreisförmigen Gassammler (210) einzuspeisen, wobei der kreisförmige Gassammler (210) sich in einer zweiten Ebene befindet, die sich über einer Ebene des kreisförmigen Verteilungssammlers (204) befindet,
jede untere Leitung (208) ausgestaltet ist, um Flüssigkeiten in einen kreisförmigen Flüssigkeitssammler (212) einzuspeisen, wobei der kreisförmige Flüssigkeitssammler (212) sich in einer dritten Ebene befindet, die sich unter einer Ebene des kreisförmigen Verteilungssammlers (204) befindet,
wobei die Anzahl der oberen Leitungen (206) und die Anzahl der unteren Leitungen (208) senkrecht zu dem kreisförmigen Verteilungssammler (204) verlaufen,
eine Gasauslassleitung (214), die an den kreisförmigen Gassammler (210) gekoppelt ist und ausgestaltet ist, um die Gase aus dem Mehrphasentrennungssystem heraus fließen zu lassen, und
eine Flüssigkeitsauslassleitung (216) umfasst, die an den kreisförmigen Flüssigkeitssammler (212) gekoppelt ist und ausgestaltet ist, um die Flüssigkeiten aus dem Mehrphasentrennungssystem heraus fließen zu lassen,
wobei die Gasauslassleitung (214) und die Flüssigkeitsauslassleitung (216) über ein Fallrohr (218) aneinander gekoppelt sind, das ausgestaltet ist, um zu ermöglichen, dass mitgerissene Flüssigkeiten aus der Gasauslassleitung (214) zu der Flüssigkeitsauslassleitung (216) fließen.

2. Mehrphasentrennungssystme nach Anspruch 1, bei dem der kreisförmige Gassammler (210) einen Tröpfchentrennungsabschnitt einschließt, der ausgestaltet ist, um mitgerissene Flüssigkeiten aus den Gasen zu entfernen.

3. Mehrphasentrennungssystem nach Anspruch 1 oder 2, bei dem der kreisförmige Flüssigkeitssammler einen Flüssigkeitsentgasungsabschnitt einschließt, der ausgestaltet ist, um mitgerissene Gase aus den Flüssigkeiten zu entfernen.

4. Mehrphasentrennungssystem nach einem der Ansprüche 1 bis 3, bei dem der kreisförmige Mehrphasenverteilungssammler (204) einen Stratifizierungsabschnitt einschließt, der ausgestaltet ist, um Gase von Flüssigkeiten innerhalb des Mehrphasenfluids zu trennen.

5. Mehrphasentrennungssystem nach einem der Ansprüche 1 bis 4, bei dem die zweite Ebene und die dritte Ebene parallel zu der Ebene des Verteilungssammlers liegen.

6. Mehrphasentrennungssystem nach einem der Ansprüche 1 bis 5, bei dem das Mehrphasenfluid Produktionsfluide aus einer unter Wasser befindlichen Bohrung einschließt.

7. Mehrphasentrennungssystem nach einem der Ansprüche 1 bis 6, das einen Entsander umfasst, wobei sich der Entsander stromaufwärts der Einlassleitung (202) und stromabwärts der Flüssigkeitsauslassleitung (216) befindet.

8. Mehrphasentrennungssystem nach einem der Ansprüche 1 bis 7, das
einen Öl/Wasser-Trennabschnitt, der an den kreisförmigen Flüssigkeitssammler (212) gekoppelt ist und ausgestaltet ist, um die Flüssigkeiten in Öl und Wasser zu trennen,
eine Ölauslassleitung, die an den Öl/Wasser-Trennungsabschnitt gekoppelt ist und ausgestaltet ist, um das Öl aus dem Mehrphasentrennungssystem herausfließen zu lassen, und
eine Wasserauslassleitung einschließt, die an den Öl/Wasser-Trennungsabschnitt gekoppelt ist und ausgestaltet ist, um das Wasser aus dem Mehrphasentrennungssystem herausfließen zu lassen, wobei der Öl/Wasser-Trennungsabschnitt über ein abdichtendes Fallrohr an den kreisförmigen Verteilungssammler (204) gekoppelt ist.

9. Verfahren zum Trennen von Flüssigkeiten und Gasen innerhalb eines Mehrphasenfluids unter Verwendung eines Mehrphasentrennungssystems gemäß Anspruch 1, bei dem:
ein Mehrphasenfluid in den kreisförmigen Verteilungssammler (204) des Mehrphasentrennungssystems fließen gelassen wird, das Mehrphasenfluid innerhalb des kreisförmigen Verteilungssammlers (204) in Gase und Flüssigkeiten getrennt wird;
die Gase in den kreisförmigen Gassammler (210) fließen gelassen werden, der sich über einer Ebene des kreisförmigen Verteilungssammlers (204) befindet,
die Flüssigkeiten in den kreisförmigen Flüssigkeitssammler (212) fließen gelassen werden, der sich unter der Ebene des kreisförmigen Verteilungssammlers (204) befindet,
die Gase über die Gasauslassleitung (214) aus dem Mehrphasentrennungssystem heraus fließen gelassen werden, und
die Flüssigkeiten über die Flüssigkeitsauslassleitung (216) aus dem Mehrphasentrennungssystem heraus fließen gelassen werden, wobei innerhalb der Gasauslassleitung mitgerissene Flüssigkeiten über das Fallrohr zu der Flüssigkeitsauslassleitung fließen gelassen werden.

10. Verfahren nach Anspruch 9, bei dem
die Gase aus dem Mehrphasentrennungssystem zu stromabwärts liegenden Flüssigkeitsverarbeitungsgerätschaften oder einer Gasexportleitung fließen gelassen werden, und
die Flüssigkeiten aus dem Mehrphasentrennungssystem zu stromabwärts liegenden Gasverarbeitungsgerätschaften oder einer Flüssigkeitsexportleitung fließen gelassen werden.

11. Verfahren nach einem der Ansprüche 9 oder 10, bei dem die Flüssigkeiten in Öl und Wasser getrennt werden,
das Öl über eine Ölauslassleitung aus dem Mehrphasentrennungssystem heraus fließen gelassen wird, und
das Wasser über eine Wasserauslassleitung aus dem Mehrphasentrennungssystem heraus fließen gelassen wird.

## Revendications

1. Système de séparation de phases multiples, comprenant :
une ligne d'entrée (202) configurée pour délivrer un fluide à phases multiples dans un collecteur de distribution circulaire (204) à l'intérieur du système de séparation de phases multiples, le collecteur de distribution circulaire (204) étant couplé à un certain nombre de lignes supérieures (206) et à un certain nombre de lignes inférieures (208) ;
chaque ligne supérieure (206) étant configurée pour délivrer des gaz dans un collecteur de gaz circulaire (210), le collecteur de gaz circulaire (210) se trouvant dans un deuxième plan qui se trouve au-dessus d'un plan du collecteur de distribution circulaire (204) ;
chaque ligne inférieure (208) étant configurée pour délivrer des liquides dans un collecteur de liquides circulaire (212), le collecteur de liquides circulaire (212) se trouvant dans un troisième plan qui se trouve en dessous du plan du collecteur de distribution circulaire (204) ;
dans lequel le nombre de lignes supérieures (206) et le nombre de lignes inférieures (208) sont perpendiculaires au collecteur de distribution circulaire (204) ;
une ligne de sortie de gaz (214) qui est couplée au collecteur de gaz circulaire (210) et qui est configurée pour faire s'écouler les gaz hors du système de séparation de phases multiples ; et
une ligne de sortie de liquides (216) qui est couplée au collecteur de liquides circulaire (212) et qui est configurée pour faire s'écouler les liquides hors du système de séparation de phases multiples ;
dans lequel la ligne de sortie de gaz (214) et la ligne de sortie de liquides (216) sont couplées par l'intermédiaire d'un conduit de descente (218) configuré pour permettre à des liquides entraînés de s'écouler de la ligne de sortie de gaz (214) à la ligne de sortie de liquides (216).

2. Système de séparation de phases multiples selon la revendication 1, dans lequel le collecteur de gaz circulaire (210) comprend une section de séparation de gouttelettes configurée pour retirer des liquides entraînés à partir des gaz.

3. Système de séparation de phases multiples selon l'une quelconque des revendications 1 ou 2, dans lequel le collecteur de liquides circulaire comprend une section de dégazage de liquides configurée pour retirer des gaz entraînés à partir des liquides.

4. Système de séparation de phases multiples selon l'une quelconque des revendications 1 à 3, dans lequel le collecteur de distribution circulaire de phases multiples (204) comprend une section de stratification configurée pour séparer des gaz à partir de liquides à l'intérieur du fluide à phases multiples.

5. Système de séparation de phases multiples selon l'une quelconque des revendications 1 à 4, dans lequel le deuxième plan et le troisième plan sont parallèles au plan du collecteur de distribution.

6. Système de séparation de phases multiples selon l'une quelconque des revendications 1 à 5, dans lequel le fluide à phases multiples comprend des fluides de production venant d'un puits sous-marin.

7. Système de séparation de phases multiples selon l'une quelconque des revendications 1 à 6, comprenant un désableur, le désableur étant disposé en amont de la ligne d'entrée (202), disposé en aval de la ligne de sortie de liquides (216).

8. Système de séparation de phases multiples selon l'une quelconque des revendications 1 à 7, comprenant :
une section de séparation huile/eau qui est couplée au collecteur de liquides circulaire (212) et qui est configurée pour séparer les liquides en huile et en eau ;
une ligne de sortie d'huile qui est couplée à la section de séparation huile/eau et qui est configurée pour faire s'écouler l'huile hors du système de séparation de phases multiples ; et
une ligne de sortie d'eau qui est couplée à la section de séparation huile/eau et qui est configurée pour faire s'écouler l'eau hors du système de séparation de phases multiples, la section de séparation huile/eau étant couplée au collecteur de distribution circulaire (204) par l'intermédiaire d'un conduit de descente de scellement étanche.

9. Procédé pour la séparation de liquides et de gaz à l'intérieur d'un fluide à phases multiples à l'aide d'un système de séparation de phases multiples selon la revendication 1, comprenant les étapes consistant en :
l'écoulement d'un fluide à phases multiples dans le collecteur de distribution circulaire (204) du système de séparation de phases multiples ;
la séparation du fluide à phases multiples en gaz et en liquides à l'intérieur du collecteur de distribution circulaire (204) ;
l'écoulement des gaz dans le collecteur de gaz circulaire (210) qui se trouve au-dessus d'un plan du collecteur de distribution circulaire (204) ;
l'écoulement des liquides dans le collecteur de liquides circulaire (212) qui se trouve en dessous du plan du collecteur de distribution circulaire (204) ;
l'écoulement des gaz hors du système de séparation de phases multiples par l'intermédiaire de la ligne de sortie de gaz (214) ; et
l'écoulement des liquides hors du système de séparation de phases multiples par l'intermédiaire de la ligne de sortie de liquides (216) ;
dans lequel les liquides entraînés à l'intérieur de la ligne de sortie de gaz sont amenés à s'écouler vers la ligne de sortie de liquides par l'intermédiaire du conduit de descente.

10. Procédé selon la revendication 9, comprenant les étapes consistant en :
l'écoulement des gaz du système de séparation de phases multiples à un équipement de traitement de liquides aval ou à une ligne d'export de gaz ; et
l'écoulement des liquides du système de séparation de phases multiples à un équipement de traitement de gaz aval ou à une ligne d'export de liquides.

11. Procédé selon l'une quelconque des revendications 9 ou 10, comprenant les étapes consistant en :
la séparation des liquides en huile et en eau ;
l'écoulement de l'huile hors du système de séparation de phases multiples par l'intermédiaire d'une ligne de sortie d'huile ; et
l'écoulement de l'eau hors du système de séparation de phases multiples par l'intermédiaire d'une ligne de sortie d'eau.
